# EUROPEAN PATENT APPLICATION

(11) **EP 3 379 804 A2**
(43) Date of publication of application: **26.09.2018**
(21) Application number: 18162182.2
(22) Date of filing: 16.03.2018
(51) Int. Cl.: H04L 29/08, G06Q 10/00

(54) **SECURE DATA COLLECTION SYSTEM AND SECURE DATA COLLECTION METHOD**

(30) Priority: 24.03.2017 JP 2017060092
(71) Applicant: Toshiba TEC Kabushiki Kaisha, Tokyo 141-8562 (JP)
(72) Inventor: MATSUSHITA, Katsunori, Shinagawa-ku, Tokyo 141-8562 (JP)
(74) Representative: Takeuchi, Maya

(57) **Abstract**

A secure data collection system includes a centralized management server, a first data collection system including a plurality of computing devices communicating with each other and a first communication interface connected to a public network, and a second data collection system including a plurality of computing devices communicating with each other and a second communication interface connected to the public network. The management server is connected to the public network and configured to enhance security of the first data collected and transmitted through the first communication interface by the first data collection system and second data collected and transmitted through the second communication interface by the second data collection system while converting the first data and the second data into composite data.

## Description

### FIELD

The present invention relates to the field of data management technologies in general, and an embodiment described herein relates in particular to secure data collection system.

### BACKGROUND

In a store, for example, a settlement report is created and submitted to a manager. The settlement report includes information on commodities sold on a daily basis and sales amount of the commodities.

Generally, this settlement report is printed out by a general electronic cash register (ECR) or a point of sale (POS) terminal. The store manager inputs the settlement information described in the printed settlement report to a system terminal of the store, creates daily report data, and transmits the created daily report data to a business server of an administrator.

The administrator visually checks whether or not the contents of the settlement information described in the submitted settlement report are consistent with the contents of the daily report data retrieved from the business server.

In the related art, store managers create daily report data to submit to an administrator by extracting settlement information from the printed settlement by manual input. Creating daily report data as daily work takes time and effort after business closing. The administrator checks the contents of the daily report data by comparing the printed settlement report with the daily report data displayed on a screen. In addition, since the printed settlement report is confidential information of the store, the administrator has to return the report to the store manager after collating with daily report data. As the administrator handles a plurality of stores, checking work daily is not easy, and it takes time and effort to return the printed settlement reports to respective store managers.

To solve such problem, there is provided a secure data collection system including a centralized management server and distributed data collection systems, comprising:
a first data collection system including a plurality of computing devices communicating with each other and a first communication interface connected to a public network;
a second data collection system including a plurality of computing devices communicating with each other and a second communication interface connected to the public network; and
an administrator system connected to the public network and configured to enhance security of first data collected and transmitted through the first communication interface by the first data collection system and second data collected and transmitted through the second communication interface by the second data collection system while converting the first data and the second data into composite data.

Preferably, the plurality of computing devices in the first data collection system includes:
an optical reading device configured to generate image data by optically reading a daily settlement report; and
a terminal configured to perform character recognition processing on the image data to generate settlement data, generate daily report data based on the settlement data, and transmit to the administrator system via the first communication interface, in association: the daily report data, the image data, and an identifier.

Preferably still, the administrator system is configured to:
receive the daily report data and the image data,
display the daily report data and the image data,
perform, based on a user input, saving the daily report data or correcting the daily report data, and then saving the corrected daily report data, and
deleting the image data after the daily report data or the corrected daily report data is saved.

Preferably yet, the terminal is further configured to:
determine whether the daily report data includes erroneous data,
if the daily report data includes erroneous data, correct the daily report data based on a user input, and
set an input category for the daily report data based on whether the correction is performed in any one of the first terminal and second terminal, wherein the daily report data includes the input category.

Suitably, when the input category indicates the correction was performed, the administrator system displays the daily report data in a manner that indicates the data that was corrected.

Suitably still, the input category is set as one of: (i) automatic input if no correction is made to the daily report data, and (ii) manual input if a correction is made to the daily report data in any one of the terminal and the administrator system.

Suitably yet, the plurality of computing devices in the first data collection system further includes:
at least one register device configured to perform registration and transaction processing for commodities sold, and print the daily settlement report based on all of the registration and transaction processing performed over a predetermined time period.

Typically, the terminal is further configured to:
classify data elements in the settlement data in accordance with a predetermined format for the daily report data, wherein the daily report data is generated based on the classified data elements.

Typically still, the terminal includes a display configured to:
turn off at a first predetermined time without interrupting processing in the administrator system and without interrupting communication with the administrator system, and
turn on at a second predetermined time.

Typically yet, the first predetermined time is a set time after a close of business, and the second predetermined time is a set time before an opening of business.

The invention also relates to a secure data collection method using a data correction system and an administrator system, comprising steps of:
generating daily report data and image data by the data correction system,
receiving the daily report data and the image data by the administrator system,
displaying the daily report data and the image data by the administrator system,
performing, based on a user input, saving the daily report data or correcting the daily report data, and then saving the corrected daily report data, by the administrator system, and
deleting the image data after the daily report data or the corrected daily report data is saved, by the administrator system.

Preferably, the secure data collection method further comprising steps of:
determining whether the daily report data includes erroneous data by the data correction system,
if the daily report data includes erroneous data, correcting the daily report data based on a user input by the data correction system, and
setting an input category for the daily report data based on whether the correction is performed in the data correction system, wherein the daily report data includes the input category.

The invention further relates to a storage device storing a program causing a computer to execute the method.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram showing a configuration of a daily report data creation system according to an embodiment.
FIG. 2A is a flowchart showing processing for creating daily report data on a store side .
FIG. 2B is a flowchart showing processing for creating daily report data on an administrator side .
FIG. 3 is a diagram showing a timing of turning off a backlight of a system terminal.

### DETAILED DESCRIPTION

In general, according to one embodiment, a secure data collection system includes a centralized management server, a first data collection system including a plurality of computing devices communicating with each other and a first communication interface connected to a public network, and a second data collection system including a plurality of computing devices communicating with each other and a second communication interface connected to the public network. The management server is connected to the public network and configured to enhance security of the first data collected and transmitted through the first communication interface by the first data collection system and second data collected and transmitted through the second communication interface by the second data collection system while converting the first data and the second data into composite data. An embodiment will be described below with reference to drawings.

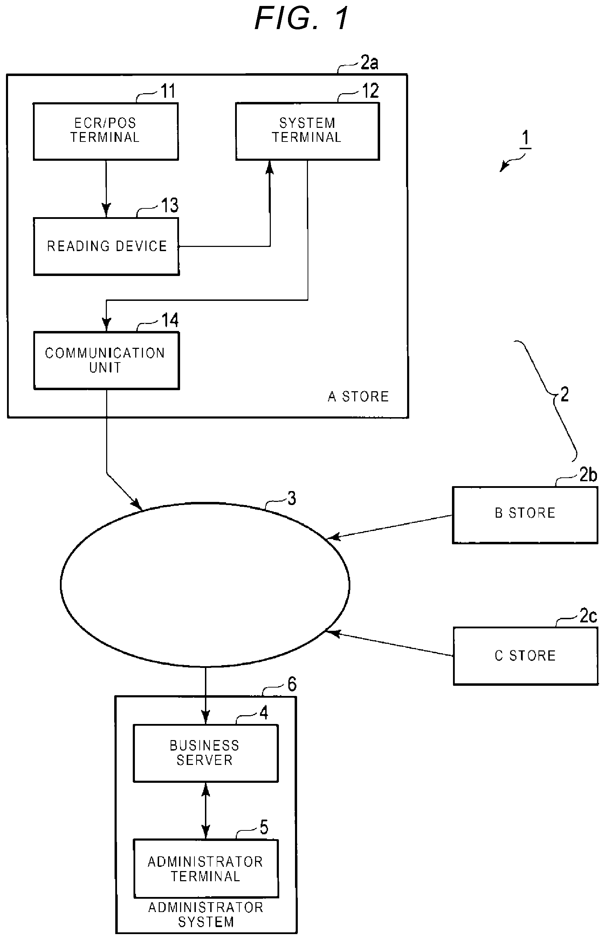

FIG. 1 is a diagram showing a configuration of a daily report data creation system according to an embodiment.

The daily report data creation system of the present embodiment is a system for automatically creating daily report data based on daily settlement data in an ECR or a POS system (hereinafter, referred to as an ECR/POS system). The daily report data creation system is implemented in the ECR/POS system. In the configuration shown in FIG. 1, it is assumed that the ECR/POS system shows the minimum constituent parts for implementing the daily report data creation system according to the present embodiment and includes standard components such as, for example, an output device such as a printer, an external storage device, and the like.

The daily report data creation system 1 is roughly divided into a store group 2 and an administrator system 6, which are connected so as to communicate via a network 3 such as a LAN or the Internet. The store group 2 includes a plurality of stores such as: an A store 2a, a B store 2b, and a C store 2c. The administrator system 6 which collects and manages daily report data from each store includes at least a business server 4 and an administrator terminal 5 consisting of a personal computer.

Each store 2a, 2b, 2c of the store group 2 includes at least an ECR or POS terminal (hereinafter, referred to as an ECR/POS terminal) 11, a system terminal 12, an optical reading device 13, and a communication unit 14.

The ECR/POS terminal 11 performs a register function of receiving payment, inputting sales amount, and printing out the sales amount over a certain period and information on the sold commodities (goods for sale) as a settlement report. The settlement report includes information on commodity name, commodity classification, category, price, and the like of the sold commodities. In some cases, the ECR/POS terminal 11 may be a different model for each store.

The reading device 13 is, for example, an optical reading device such as an optical character recognition/reader (OCR). This reading device 13 optically reads a settlement report using an OCR reader or a CCD camera. An OCR reader or a CCD camera may be provided in the ECR/POS terminal 11 so that to print out a settlement report and read from the printed settlement report and output the image data to the reading device 13.

In the present embodiment, the reading device 13 reads the settlement report printed out from the ECR/POS terminal 11 to form image data, further performs character recognition processing on the image data, and generates settlement data consisting of characters, numerical values, and the like. The settlement information included in the settlement report and the information of the settlement data based on the character recognition processing are the same information. The settlement data includes at least numerical data such as data items and amounts. Image data and settlement data are input to the system terminal 12.

The reading device 13 obtains character information by performing character recognition processing on image data, and it is possible for the system terminal 12 to create settlement data from this character information.

In this way, the reading device 13, or the reading device 13 and the system terminal 12, function as a settlement data generating unit that generates settlement data by recognition processing from the image data obtained by optically reading the settlement report printed with settlement information on the sales amount and sales items.

Although not specifically shown, the system terminal 12 includes a central processing unit (CPU), a storage device, a display device, a keyboard, and the like. The image data and accumulated data input from the reading device 13 are stored in the storage device. In addition, in the storage device, a dedicated program such as a daily report creation program or the like is stored in advance. By executing this daily report creation program with the CPU, daily report data is automatically created from the settlement data input from the reading device 13.

In this way, the system terminal 12 functions as a daily report data creation unit that creates daily report data from settlement data.

The communication unit 14 transmits the image data of the settlement report and the daily report data output from the system terminal 12 to the business server 4 of the administrator system 6 via the network 3.

In this way, the system terminal 12 and the communication unit 14 function as a transmission unit that transmits the daily report data together with the image data.

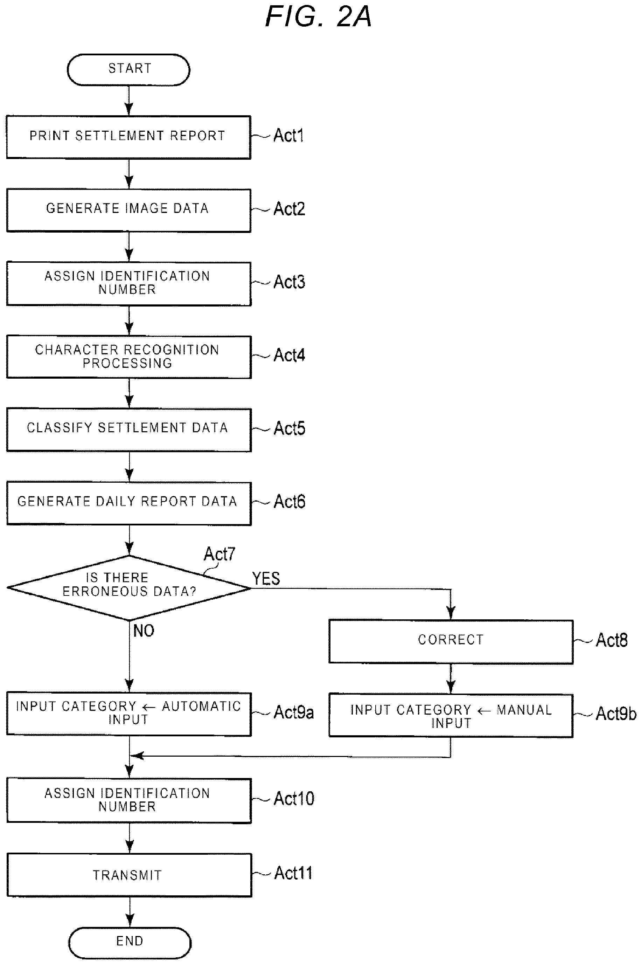

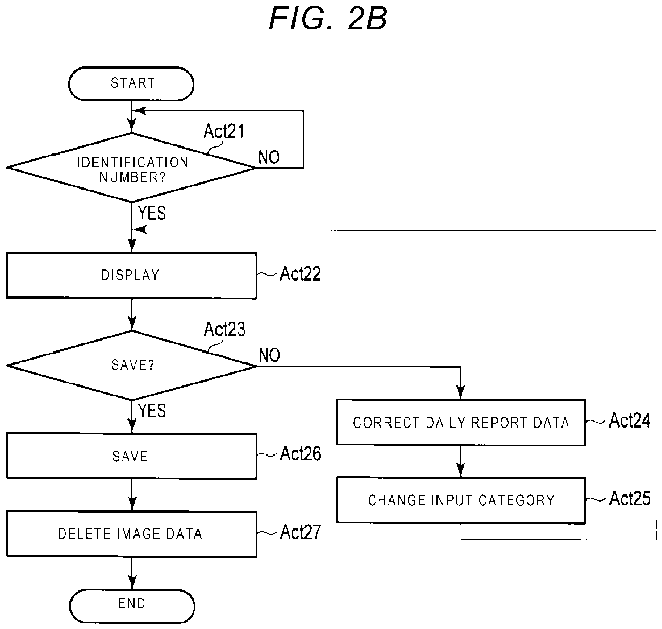

Next, with reference to the flowcharts shown in FIGS. 2A and 2B, data creation processing by the daily report data creation system of the present embodiment will be described. The daily report data in the present embodiment is created by the CPU of the system terminal 12 executing the daily report creation program stored in the storage device.

First, the store manager prints out a settlement report consisting of settlement information for one day based on the sales amount and information on the sold commodities by the ECR/POS terminal 11 (Act 1). Next, the settlement information described in the settlement report is optically read by the reading device 13, and image data is generated (Act 2). The created image data is given an identification number determined for each store and is temporarily stored (Act 3). This image data may be formed by settlement information of a plurality of cases.

Further, the image data is subjected to character recognition processing in the reading device 13 and converted into settlement data (Act 4). This settlement data includes characters, numerical values, and the like. The settlement data and the image data are input to the system terminal 12 and stored.

Next, the CPU of the system terminal 12 classifies the stored settlement data into previously specified data items in accordance with a preset daily report creation program (Act 5). Subsequently, the CPU automatically extracts numerical data from the classified data items and inputs the numerical data into each input item of the daily report data, thereby creating daily report data (Act 6). The daily report data of the present embodiment includes at least one record that includes, for example, a data item including commodity classification and commodity name, numerical data such as sales amount, quantity, unit price, and input category.

The input category is based on a correction history or an input history and includes "automatic input" which indicates that the daily report data was automatically input and uncorrected, and "manual input" which indicates that the daily report data was corrected by key input after being automatically input. As the input category, at least "manual input" is described. Therefore, by checking the input category, it is possible to determine whether or not a correction was manually made.

Next, with respect to the daily report data created in Act 6, the CPU refers to the terminal total data and determines whether there is missing information that was not read, or whether there is erroneous data (Act 7). The presence or absence of erroneous data may be determined, for example, by performing a data check with a data arithmetic expression for checking an arithmetic operation indicated in the data. Alternatively, the existence of missing information or erroneous data may be checked by the store manager confirming the data visually. If it is determined in Act 7 that there is no missing information or erroneous data ("NO" in Act 7), the CPU enters "automatic input" in the column of input category of daily report data (Act 9a). Alternatively, the input category is set to blank.

On the other hand, if it is determined that there is missing information or erroneous data ("YES" in Act 7), the CPU displays the missing information or the erroneous data on the display device and prompts the store manager to correct the data of the daily report data by manual input based on the printed settlement report (Act 8). Then, the CPU enters "manual input" in the column of input category of the daily report data for the data item or the numerical data whose data is corrected in the processing of Act 8 above (Act 9b).

After setting the input category, the CPU also assigns the same identification number as that given to the image data in the processing of Act 3 to the daily report data (Act 10). Then, the CPU attaches the image data to the daily report data to output to the communication unit 14 and transmits the data from the communication unit 14 to the business server 4 via the network 3 (Act 11).

The business server 4 stores the daily report data received from each store 2 a, 2 b, 2 c, ... via the network 3 in the storage device.

The CPU (not shown) of the administrator terminal 5 waits for input of the identification number via the input device (Act 21). When the identification number is input by the operation of the administrator, the daily report data and the image data corresponding to the input identification number are read out from the business server 4 and displayed on the display device (not shown) (Act 22).

The administrator compares the daily report data displayed on this display device with the image data, performs a data check by comparing whether or not the data contents of the two are consistent, and checks that there is no error in the daily report data. At this time, the CPU (not shown) of the administrator terminal 5 performs an identification display such as changing the display color in the input category of daily report data where "manual input" is entered so that the data that is manually corrected can be recognized. As a result, the administrator may also check whether there is an unauthorized correction. If there is no error in this data check, the administrator operates and instructs the input device to save the data. On the other hand, if there is an error, the administrator operates and instructs the input device to correct the data.

The CPU of the administrator terminal 5 waits for saving data or a correction to be instructed (Act 22). When a correction is instructed ("NO" in Act 23), the CPU of the administrator terminal 5 corrects the daily report data by the operation of the administrator (Act 24). Then, with respect to the corrected input category, when the input category was originally "automatic input", the CPU of the administrator terminal 5 changes the input category to "manual input" (Act 25). When the correction is completed, the processing proceeds to Act 22, and the corrected daily report data and the image data are displayed on the display device. Then, the CPU of the administrator terminal 5 waits again for saving data or a correction to be instructed (Act 22).

On the other hand, when saving data is instructed ("YES" in Act 23), the CPU of the administrator terminal 5 saves the daily report data in the business server 4 or the external storage device (Act 26). Further, after the saving data is completed, the CPU of the administrator terminal 5 automatically performs deletion processing of deleting the image data from the business server 4 without waiting for a manual deletion operation to be input by the administrator (Act 27).

In this way, the administrator terminal 5 functions as a check unit that receives daily report data and image data, and presents settlement data of the daily report data and the image data so as to check for consistency therebetween. The administrator terminal 5 functions as an image data deletion unit that deletes the image data after the checking is completed.

According to the present embodiment, as an effect on the store side, if the settlement report is read correctly and daily report data is created, the store manager may make a correction with less trouble. In addition, it is unnecessary to submit a printout settlement report of the related art and receive the settlement report returned after checking.

In addition, since input items are automatically input and set by using the daily report creation program or a dedicated application from the settlement report, and daily report data is created, only the checking work is required. Thus, the amount of reporting work after the end of business hours is reduced, and the creation time may be reduced.

In addition, as an effect of the administrator side, checking work is performed by comparing the printed settlement report with the daily report data displayed on the screen. However, according to the present embodiment, since checking may be performed by displaying the printed settlement report and the daily report data on the same screen, checking work may be performed efficiently.

In addition, there is no need for receiving and returning the settlement report. In addition, the settlement report on paper is sales information of each tenant, and data leakage prevention measures are necessary. However, according to the present embodiment, the possibility of data leakage may be reduced by automatically deleting the image data after checking.

Additionally, the display screen of the system terminal 12 is turned on (i.e., the backlight of the display screen is on) during start-up. Therefore, during processing by the system terminal 12 and the period of communication with the business server 4, the backlight is not turned off. In addition, if the system terminal 12 is on but the display screen is turned off after the business hours, a worker may determine that the system terminal 12 is off. The worker may therefore press a power switch in order to start up the system terminal 12. However, pressing the power switch turns the system terminal 12 off, and the system terminal 12 experiences an emergency stop of power down. Further communication with the business server 4 may be terminated prematurely.

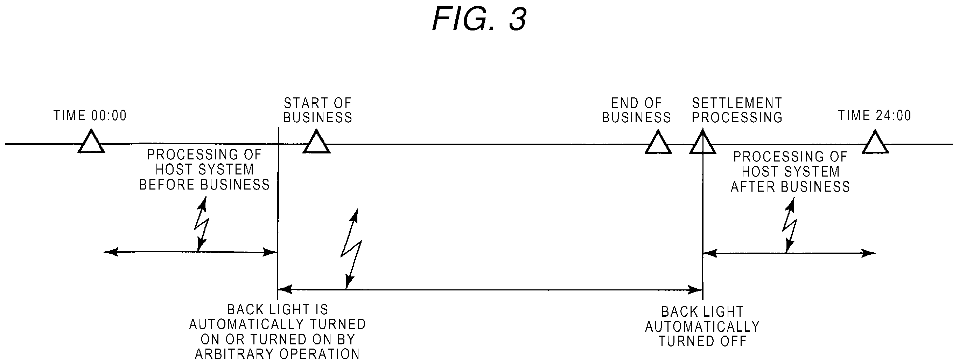

Therefore, in the present embodiment, as shown in FIG. 3, the ON/OFF of the backlight is controlled by using a clock function originally provided in the system terminal 12. For example, the ON/OFF of the backlight is controlled from the time when the settlement processing is completed after the business end time of the store to an arbitrary set time before the business start of the next day. When the set time before the start of business arrives, the backlight is turned on.

That is, in Act 11 of FIG. 2A described above, the daily report data is transmitted from the communication unit 14 to the business server 4 of the host system via the network 3. After the settlement processing is performed, then the backlight is turned off. When the arbitrary set time before the business start time of the next day elapses, the backlight is turned on again. Even during the night when this backlight is turned off, there are cases that processing (pre-business processing and after-business processing) is periodically performed between the business server 4 and the system terminal in a state where the backlight is turned off and not displayed.

As described above, by controlling the ON/OFF of the backlight, the contents of communication between the systems performed is not displayed while a concerned person is absent, thus leakage of the contents to a third party may be prevented. In addition, by turning on the backlight before the start of business and before the concerned person comes to work, it is possible to prevent the erroneous turning-off operation of the power switch. In addition, by turning off the backlight at night, it is possible to suppress power consumption and lead to prolongation of the product life of the display unit.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A secure data collection system including a centralized management server and distributed data collection systems, comprising:
a first data collection system including a plurality of computing devices communicating with each other and a first communication interface connected to a public network;
a second data collection system including a plurality of computing devices communicating with each other and a second communication interface connected to the public network; and
an administrator system connected to the public network and configured to enhance security of first data collected and transmitted through the first communication interface by the first data collection system and second data collected and transmitted through the second communication interface by the second data collection system while converting the first data and the second data into composite data.

2. The system according to claim 1, wherein the plurality of computing devices in the first data collection system includes:
an optical reading device configured to generate image data by optically reading a daily settlement report; and
a terminal configured to perform character recognition processing on the image data to generate settlement data, generate daily report data based on the settlement data, and transmit to the administrator system via the first communication interface, in association: the daily report data, the image data, and an identifier.

3. The system according to claim 2, wherein the administrator system is configured to:
receive the daily report data and the image data,
display the daily report data and the image data,
perform, based on a user input, saving the daily report data or correcting the daily report data, and then saving the corrected daily report data, and
deleting the image data after the daily report data or the corrected daily report data is saved.

4. The system according to claim 3, wherein the terminal is further configured to:
determine whether the daily report data includes erroneous data,
if the daily report data includes erroneous data, correct the daily report data based on a user input, and
set an input category for the daily report data based on whether the correction is performed in any one of the first terminal and second terminal, wherein the daily report data includes the input category.

5. The system according to claim 4, wherein:
when the input category indicates the correction was performed, the administrator system displays the daily report data in a manner that indicates the data that was corrected.

6. The system according to claim 4 or 5, wherein:
the input category is set as one of: (i) automatic input if no correction is made to the daily report data, and (ii) manual input if a correction is made to the daily report data in any one of the terminal and the administrator system.

7. The system according to any one of claims 2 to 6, wherein the plurality of computing devices in the first data collection system further includes:
at least one register device configured to perform registration and transaction processing for commodities sold, and print the daily settlement report based on all of the registration and transaction processing performed over a predetermined time period.

8. The system according to any one of claims 2 to 7, wherein the terminal is further configured to:
classify data elements in the settlement data in accordance with a predetermined format for the daily report data, wherein the daily report data is generated based on the classified data elements.

9. The system according to any one of claims 2 to 8, wherein the terminal includes a display configured to:
turn off at a first predetermined time without interrupting processing in the administrator system and without interrupting communication with the administrator system, and
turn on at a second predetermined time.

10. The system according to claim 9, wherein the first predetermined time is a set time after a close of business, and the second predetermined time is a set time before an opening of business.

11. A secure data collection method using a data correction system and an administrator system, comprising steps of:
generating daily report data and image data by the data correction system,
receiving the daily report data and the image data by the administrator system,
displaying the daily report data and the image data by the administrator system,
performing, based on a user input, saving the daily report data or correcting the daily report data, and then saving the corrected daily report data, by the administrator system, and
deleting the image data after the daily report data or the corrected daily report data is saved, by the administrator system.

12. The secure data collection method further comprising steps of:
determining whether the daily report data includes erroneous data by the data correction system,
if the daily report data includes erroneous data, correcting the daily report data based on a user input by the data correction system, and
setting an input category for the daily report data based on whether the correction is performed in the data correction system, wherein the daily report data includes the input category.

13. A storage device storing a program causing a computer to execute the method according to claim 11 or 12.
